# EUROPÄISCHE PATENTSCHRIFT

(11) **EP 1 987 109 B1**
(45) Veröffentlichungstag und Bekanntmachung des Hinweises auf die Patenterteilung: **28.06.2017**
(21) Anmeldenummer: 07722862.5
(22) Anmeldetag: 20.02.2007
(51) Int. Cl.: C09J 11/04, C09J 101/02, C09J 103/04

(54) **FLÜSSIGES KLEBSTOFFKONZENTRAT**
LIQUID ADHESIVE CONCENTRATE
CONCENTRE DE MATIERE ADHESIVE LIQUIDE

(30) Priorität: 21.02.2006 DE 102006008001
(43) Veröffentlichungstag der Anmeldung: 05.11.2008
(73) Patentinhaber: Henkel AG & Co. KGaA, 40589 Düsseldorf (DE)
(72) Erfinder: SIPMANN, Sabine, 40764 Langenfeld (DE); HOFFMANN, Heinz-Peter, 40789 Monheim (DE); NEITZER, Klaus, 40595 Düsseldorf (DE); KUX, Alexander, 40789 Monheim (DE); GROSS, Stephanie, 40789 Monheim (DE); SCHÖTTMER, Bernhard, 40789 Monheim (DE)
(86) Internationale Anmeldenummer: PCT/EP2007/001439
(87) Internationale Veröffentlichungsnummer: WO 2007/096123

(56) Entgegenhaltungen:
- WO-A-03/004562
- WO-A-2004/106450
- GB-A- 2 310 861
- US-A- 4 980 391

## Beschreibung

Die Erfindung betrifft ein flüssiges Klebstoffkonzentrat, ein Verfahren zu seiner Herstellung und seine Verwendung sowie ein Tapetenablöserkonzentrat und die Verwendung von Ca-Verbindungen als Additiv zur Stabilisierung von flüssigen Klebstoffkonzentraten.

Klebstoffe zum Anbringen von Tapeten an der Wand basieren bislang häufig auf Feststoffzusammensetzungen aus flockenförmigen Stärkeethern oder pulverförmigen Celluloseethern oder Gemischen davon. Diese Produkte werden als Pulvergemisch vertrieben, das beim Mischen mit Wasser den fertigen Klebstoff ergibt. Das Vermischen mit Wasser erfordert in der Regel die Verwendung einer gesamten Packungsgröße des pulverförmigen Produkts, um eine Unregelmäßigkeit der Zusammensetzung durch Pulverabscheidung in der Verpackung zu vermeiden. Zudem bilden sich häufig Klumpen von nicht aufgelöstem Pulver, und die hergestellte Paste muss für einige Zeit stehengelassen werden, um eine vollständige Auflösung der Zusammensetzung zu bewirken.

Es wurde versucht, durch flüssige Klebstoffkonzentratzusammensetzungen, die bereits dispergierte Methylcellulose oder Stärke in einem geeigneten Lösungsmittel enthält, die Probleme der pulverförmigen Tapetenkleister zu vermeiden. Die Stabilität derartiger Zusammensetzungen ist im Allgemeinen jedoch gering, und es tritt leicht eine Phasentrennung in Flüssigkeits- und Feststoffphasen auf. Es ist zudem schwierig, derartige Zusammensetzungen durch Schütteln zu redispergieren. Auch die Kontrolle der Viskosität und Gießbarkeit ist schwierig.

In der GB-A-2 310 861 ist eine flüssige Klebstoffkonzentratzusammensetzung beschrieben, die ein wasserlösliches Polymer in einem wassermischbaren oder emulgierbaren im Wesentlichen nicht wässrigen Lösungsmittel enthält. Beispielsweise wurde Methylhydroxyethylcellulose in Isopropanol eingebracht. Die erzielten Formulierungen sind jedoch nicht lagerstabil und separieren in eine feste und eine flüssige Phase. Das Material kann dann nicht mehr durch einfaches Schütteln redispergiert werden.

In der EP-B-0 839 888 ist ein flüssiges Klebstoffkonzentrat beschrieben, das in einem wassermischbaren oder -emulgierbaren im Wesentlichen nicht-wässrigen Lösungsmittel ein dispergiertes wasserlösliches Polymer und darüber hinaus einen Viskositätsveränderer auf Silikatbasis und ein oberflächenaktives Mittel enthält. Auch diese Formulierungen erfüllen nicht alle Anforderungen an die Lagerstabilität und weisen zudem eine hohe Viskosität auf.

Aufgabe der vorliegenden Erfindung ist die Bereitstellung von flüssigen Klebstoffkonzentraten, die die Nachteile der bekannten Konzentrate vermeiden und insbesondere eine erhöhte Stabilität zeigen. Die Konzentrate sollen zudem dünnflüssig bzw. fließfähig sein und beim Vermischen mit wasserhaltigen Lösungsmitteln einen Viskositätsanstieg zeigen.

Die Aufgabe wird erfindungsgemäß gelöst durch ein flüssiges Klebstoffkonzentrat, enthaltend Carboxymethylcellulose, Stärke, Stärkederivate oder Gemische davon, mindestens einen Stabilisator und mindestens eine Ca-Verbindung in einem wassermisch- oder -emulgierbaren, organischen Lösungsmittel, das dadurch gekennzeichnet ist, dass es 10 bis 90 Gew.-% des Lösungsmittels, 5 bis 50 Gew.-% Carboxymethylcellulose, Stärke, Stärkederivate oder Gemische davon, 0,1 bis 10 Gew.-% des mindestens einen Stabilisators, 1 bis 30 Gew.-% der mindestens einen Ca-Verbindung, 0 bis 2 Gew.-% mindestens eines Konservierungsmittels, 0 bis 2 Gew.-% mindestens einen Entschäumers und 0 bis 50 Gew.-% Wasser, das wässrige Dispersionen bildende Polymere enthalten kann, jeweils bezogen auf das Konzentrat, enthält, wobei die Summe aller Inhaltsstoffe des Konzentrats 100 Gew.-% ergibt.

Es wurde erfindungsgemäß gefunden, dass durch Einsatz mindestens einer Ca-Verbindung in den flüssigen Klebstoffkonzentraten auf Basis von Carboxymethylcellulose, Stärke, Stärkederivaten oder Gemischen davon eine signifikante Erhöhung der Stabilität eintritt, während die Konzentrate dünnflüssig bzw. fließfähig bleiben.

Erfindungsgemäß können beliebige geeignete Calciumverbindungen in einer wirksamen Menge eingesetzt werden. Bevorzugt werden teilchen- oder pulverförmige Calciumverbindungen eingesetzt, die als Feststoff vorliegen und eine mittlere Teilchengröße im Bereich von 0,2 bis 20 µm, vorzugsweise 0,5 bis 10 µm, speziell 1 bis 2 µm aufweisen.

Die Calciumverbindung kann dabei eine organische Calciumverbindung wie Calciumstearat sein. Vorzugsweise ist die Calciumverbindung eine anorganische Calciumverbindung, wie Calciumoxid, - hydroxid, -carbonat oder -sulfat. Es können auch Gemische dieser Verbindungen eingesetzt werden.

Besonders bevorzugt handelt es sich bei der anorganischen Calciumverbindung um gefällte Kreide. Die gefällte Kreide weist eine enge Teilchengrößenverteilung um einen Mittelwert (D_{50%} von 1,0 µm) auf und wird durch Fällung aus einem Lösungsmittel erhalten. Die spezifische Oberfläche beträgt vorzugsweise etwa 9 m²/g, und die Stampfdichte beträgt etwa 0,5 g/ml. Die Kristallmodifikation, ermittelt durch Röntgenbeugung, entspricht dem Calcit, skalenoedrisch. Der Anteil an Calciumcarbonat beträgt etwa 99 Gew.-%. Eine geeignete gefällte Kreide ist beispielsweise von Schäfer Kalk GmbH & Co. KG in Diez unter der Bezeichnung Schäfer Precarb^{®} 100 erhältlich.

Derartige gefällte Kreide weist eine sehr gleichmäßige Teilchengröße und eine sehr gleichmäßige Oberflächenstruktur auf.

Es kann auch Weißkalkhydrat eingesetzt werden.

Die erfindungsgemäßen Klebstoffkonzentrate können zusätzlich mindestens ein Konservierungsmittel enthalten. Zudem können sie zusätzlich mindestens einen Entschäumer enthalten. Gemäß einer Ausführungsform enthalten die Klebstoffkonzentrate keine Entschäumer bzw. keine oberflächenaktiven Mittel.

Das Klebstoffkonzentrat enthält 10 bis 90 Gew.-% des Lösungsmittels, 5 bis 50 Gew.-% Carboxymethylcellulose, Stärke, Stärkederivate oder Gemische davon, 0,1 bis 10 Gew.-% des mindestens einen Stabilisators, 1 bis 30 Gew.-% der mindestens einen Ca-Verbindung, 0 bis 2 Gew.-% des mindestens einen Konservierungsmittels, 0 bis 2 Gew.-% des mindestens einen Entschäumers und 0 bis 50 Gew.-% Wasser, das wässrige Dispersionen bildende Polymere enthalten kann, jeweils bezogen auf das Konzentrat, wobei die Summe aller Inhaltsstoffe des Konzentrats 100 Gew.-% ergibt.

Bevorzugte Mengen der angegebenen Komponenten sind in dieser Reihenfolge 12 bis 80 Gew.-%, 10 bis 50 Gew.-%, 0,5 bis 7,5 Gew.-%, 1,5 bis 20 Gew.-%, 0,1 bis 1 Gew.-%, 1 bis 50 Gew.-%. Speziell bevorzugte Mengen sind in dieser Reihenfolge 15 bis 78 Gew.-%, 15 bis 50 Gew.-%, 1 bis 5 Gew.-%, 2 bis 10 Gew.-%, 0,2 bis 0,3 Gew.-%, 0,2 bis 0,5 Gew.-% und 3 bis 50 Gew.-%. Sofern das Konservierungsmittel und der Entschäumer enthalten sind, liegen sie jeweils in Mengen von mindestens 0,1 Gew.-% vor. Sofern Wasser in den Konzentraten enthalten ist, liegt es in Mengen von wenigstens 0,3 Gew.-% vor. Die Mengenangaben gelten für jede einzelne Komponente unabhängig von den Mengenangaben der anderen Komponenten. Dabei beziehen sich die Mengenangaben jeweils auf das gesamte Klebstoffkonzentrat, wobei die Summe aller Inhaltsstoffe des Klebstoffkonzentrats 100 Gew.-% ergibt. Sofern ein Zusatz von Wasser oder wässrigen Dispersionen zur Verbesserung der Klebeeigenschaften erfolgt, beträgt der Anteil des Wassers oder der wässrigen Dispersionen vorzugsweise 2 bis 70 Gew.-%, besonders bevorzugt 3 bis 60 Gew.-%, insbesondere 5 bis 50 Gew.-%, bezogen auf das gesamte flüssige Klebstoffkonzentrat.

Als Lösungsmittel können beliebige geeignete wassermisch- oder -emulgierbare, organische Lösungsmittel eingesetzt werden.

Diese organischen Lösungsmittel bestehen zum überwiegenden Teil, d. h. zu mehr als 50 Gew.-%, vorzugsweise mehr als 60, 70, 75 oder mehr als 80 Gew.-%, aus einer oder mehreren organischen, in der Regel bei Raumtemperatur flüssigen Einzelstoffen. Sie können aber auch zu einem Teil Wasser enthalten, welches beispielsweise In Folge des Herstellungsprozesses oder hygroskopischer Eigenschaften der organischen Reinsubstanzen im Lösemittel kumuliert wurde. Daher kann man organische Lösemittel auch als im Wesentlichen nicht-wässrige Lösemittel bezeichnen.

Das Lösungsmittel weist bevorzugt eine hohe Reinheit auf und führt vorzugsweise nicht zu einem signifikanten Eindicken der verwendeten Carboxymethylcellulose, Stärke, Stärkederivate oder Gemische davon. Geeignete Beispiele sind nicht-polare und schwach polare organische Lösungsmittel wie Alkohole, Glykole, Polyalkylenglykole oder Ether oder Ester davon sowie deren Gemische. Besonders geeignet als Lösungsmittel sind Isopropanol, Ethanol, Polyethylenglykol, Polypropylenglykol oder Gemische davon. Geeignete Polyethylenglykole können ein Molekulargewicht im Bereich von 100 bis 1000, vorzugsweise 200 bis 600 aufweisen. Besonders geeignete Polypropylenglykole weisen ein Molekulargewicht im Bereich von 300 bis 15000, besonders bevorzugt von 600 bis 12200 auf. Weitere geeignete Lösungsmittel sind Butandiol, Propylencarbonat, Polyethylenimin, Essigsäure, Ethoxylate, Alkanole wie Methanol, Ethanol, n-Propanol und Fettalkohole. Die Lösungsmittel sind vorzugsweise bei 20 °C flüssig und bei 20 °C in beliebigem Verhältnis mit Wasser mischbar.

Besonders bevorzugt wird Polyethylenglykol mit einem Molekulargewicht von 200 bis 600, insbesondere 300 bis 500, eingesetzt.

Erfindungsgemäß werden Carboxymethylcellulose (CMC), Stärke, Stärkederivate oder Gemische davon verwendet. Bevorzugt sind sie bei 20 °C in Wasser quellbar und/oder löslich. Geeignete Stärkederivate wie Ether oder Ester sind dem Fachmann bekannt. Besonders bevorzugt werden anionische Stärkeether oder anionische Celluloseether oder Gemische davon eingesetzt.

Unter den erwähnten Stärke- oder Celluloseethern werden Stärke- oder Cellulosederivate verstanden, die durch partielle oder vollständige Substitution von Wasserstoffatomen der Hydroxygruppen der Stärke oder Cellulose durch Alkyl- und/oder (Ar)alkylGruppen hergestellt werden. Die Alkyl- und/oder (Ar)alkyl-Gruppen tragen vorzugsweise zusätzlich nichtionische, anionische oder kationische Gruppen. Dabei sind die Einzelmoleküle in der Regel unterschiedlich substituiert, so daß ihr Substitutionsgrad ein Mittelwert ist. Außerdem kann die Substitution auch an während der Reaktion entstehenden "neuen" Hydroxygruppen einsetzen, was z.B. beim Reaktionspartner Epoxid der Fall ist. Die im Rahmen der vorliegenden Erfindung eingesetzten wasserlöslichen Stärke- oder Celluloseether tragen jedoch mindestens eine OH-Gruppe.

Die Veretherung der Stärke oder Cellulose wird im allgemeinen durch Einwirkung von (Ar)alkylhalogeniden, beispielsweise Methyl-, Ethyl- und/oder Benzylchlorid, 2-Chlorethyldiethylamin oder Chloressigsäure, und/oder Epoxiden, z.B. Ethylen-, Propylen- und/oder Butylenoxid, Glycidyltrimethylammoniumchlorid, und/oder aktiviertem Olefin, beispielsweise Acrylnitril, Acrylamid oder Vinylsulfonsäure, auf mit Basen, meist mit wäßriger Natronlauge, aktivierter Cellulose durchgeführt. Bevorzugt sind im Rahmen der vorliegenden Erfindung Carboxymethylcellulose, Carboxymethylstärke, Methylcellulose, Ethylcellulose, Hydroxyalkylcellulose, Hydroxyalkylstärke, insbesondere Hydroxyethylcellulose, Hydroxyethylstärke oder deren Mischether, wie Methylhydroxyethylcellulose, Methylhydröxyethylstärke oder Methylhydroxypropylcellulose, Methylhydroxypropylstärke, Carboxymethylhydroxyethyl cellulose, Carboxymethylhydroxyethylstärke und/oder Ethylhydroxyethylcellulose sowie Ethylhydroxyethylstärke.

Als Celluloseverbindungen eignen sich neben der natürlichen Cellulose insbesondere die Celluloseether. Geeignet sind beispielsweise Carboxymethylcellulose (CMC), Carboxymethylmethylcellulose (CMMC), Ethylcellulose (EC), Hydroxypropylcellulose (HPC), Hydroxypropylmethylcellulose (HPMC), Hydroxybutylcellulose (HBC), Hydroxybutylmethylcellulose (HBMC), Hydroxyethylcellulose (HEC), Hydroxyethylcarboxymethylcellulose (HECMC), Hydroxyethylethylcellulose (HEEC), Hydroxypropylcellulose (HPC), Hydropropylcarboxymethylcellulose (HPCMC), Hydroxypropylmethylcellulose (HPMC), Hydroxyethylmethylcellulose (HEMC), Methylhydroxyethylcellulose (MHEC), Methylhydroxyethylpropylcellulose (MHEPC), Methylcellulose (MC) und Propylcellulose (PC), wobei Carboxymethylcellulose, Methylcellulose, Methylhydroxycellulose und Methylhydroxypropylcellulose sowie Gemische aus zwei oder mehr davon sowie die Alkalisalze der CMC und die leicht ethoxylierte MC oder Gemische aus zwei oder mehr der genannten Verbindungen.

Weitere geeignete Stärkederivate sind Stärkesulfate, Stärkephosphate, Stärkexanthogenate, Stärkeacetate, Stärkecitrate oder auch Stärkesuccinate sowie Stärkeadipate.

Unter Stärke werden vor allem die Polykondensationsprodukte von D-Glucose verstanden, insbesondere Amylose und Amylopektin, aber auch deren Derivate.

Vorteilhafterweise weisen diese Materialien eine Viskosität im Bereich von 30 bis 150000 mPas, bevorzugt von 1000 bis 100000 mPas, besonders bevorzugt von 1500 bis 20000 mPas für eine 2-3 %ige, insbesondere eine 2 %ige Lösung in Wasser bei 20 °C auf.

Carboxymethylstärkeether weisen vorteilhafterweise eine Viskosität im Bereich von 50 bis 170000 mPas, bevorzugt von 2000 bis 15000 mPas für eine 3 %ige Lösung in Wasser bei 20 °C auf.

Der mindestens eine Stabilisator kann aus beliebigen geeigneten Stabilisatoren ausgewählt sein. Bevorzugt werden Tonmineralien bzw. Stabilisatoren auf Silikatbasis eingesetzt. Beispiele geeigneter Tonmineralien umfassen Caolinit, Halloysit, Illit, Montmorillonit, Bentonit, Vermiculit, Atapulgit und Saponit. Der Stabilisator kann weiterhin Glimmer und/oder Quarz umfassen und kann gegebenenfalls auch ein Dispergiermittel oder ein aliphatisches Amin umfassen. Vorteilhafterweise umfasst der Stabilisator pulverförmiges Caolin, Smectitton oder eine Kombination davon, einschließlich organischer Derivate davon wie Xanthan-Gumen. Geeignete Stabilisator auf Silikatbasis sind Schichtsilikate. Besonders bevorzugt werden erfindungsgemäß Schichtsilikate, wie z. B. Magnesiumsilikate eingesetzt. In einigen Zusammensetzungen können manche der Stabilisatoren zusätzlich auch als Verdicker wirken.

Vereinzelt kann es hilfreich sein, dem Klebstoffkonzentrat eine geringe Menge Wasser zuzusetzen. Manchmal wird das Klebstoffkonzentrat dadurch nochmals stabilisiert und eine Serumbildung unterbunden.

Die erfindungsgemäßen Klebstoffkonzentrate können zudem übliche Konservierungsmittel und Entschäumer enthalten. Beispiele üblicher Konservierungsmittel sind Biozide, insbesondere Formaldehyd-Abspalter.

Besonders geeignete Entschäumer sind in den Beispielen genannt. Gemäß einer Ausführungsform der Erfindung sind die Klebstoff- oder Tapetenablöserkonzentrate frei von Entschäumern bzw. frei von oberflächenaktiven Mitteln wie Tensiden.

Ferner können die erfindungsgemäßen Klebstoffkonzentrate weitere übliche Inhaltsstoffe aufweisen, beispielsweise Solubilitäts-verzögernde Mittel, Bindemittel, Weichmacher, AntiAbsetzmittel, pH-Modifiziermittel, Quervernetzungsmittel, Adhäsionspromotoren und klebrig machende Harze. Ein bevorzugtes Solubilitäts-verzögerndes Mittel ist Glyoxal, welches beispielsweise als Beschichtung auf der Carboxymethylcellulose, Stärke oder Stärkederivat bereitgestellt werden kann. Geeignete pH-Modifiziermittel sind beispielsweise Natriumcarbonat und 2-Amino-2-Methyl-1-Propanol.

Als Auftrags-Indikator können den Flüssig-Konzentraten Phenolphthalein oder andere pH-Indikatoren zugesetzt werden. Das Konzentrat erscheint dabei weißlich bis schwach rosa. Nach Zugabe von Wasser ist das verdünnte Produkt pinkfarben.

Die erfindungsgemäßen Klebstoffkonzentrate können auch Wasser oder wässrige Dispersionen in den genannten Mengen enthalten. Es kommen insbesondere wässrige Dispersionen von Styrolacrylaten, Acrylat-Copolymeren, Polyvinylacetat und anderen wässrige Dispersionen bildenden Polymeren in Betracht. Diese wässrigen Dispersionen können beispielsweise zur Verbesserung der Klebeeigenschaften zugesetzt werden.

Durch Zusatz von Kunstharzdispersionen oder Redispersionspulvern ist es möglich, die Feuchtfestigkeit der Suspensionen zu erhöhen.

Die Herstellung der Klebstoffkonzentrate erfolgt durch Einbringen der Inhaltsstoffe in das Lösungsmittel und nachfolgendes Vermischen. Die Reihenfolge der Zugabe der Inhaltsstoffe kann dabei frei gewählt werden. Beispielsweise werden bei Mitverwendung von Wasser das wassermischbare Lösungsmittel und ein Teil des Wassers vorgemischt, und sodann wird der Stabilisator, insbesondere das Schichtsilikat eingerührt. Sodann werden die weiteren Inhaltsstoffe eingerührt.

Die erfindungsgemäßen Klebstoffkonzentrate werden nach Verdünnen mit Wasser, das wässrige Dispersionen bildende Polymere enthalten kann, als Klebstoff zum Anbringen von Tapeten oder anderen Wand/Bodenbelägen auf saugfähigen Untergründen, z. B. an der Wand, von textilen Bodenbelägen auf dem Boden oder als Vlies-, Papier-, Karton- oder Pappeklebstoffe verwendet. Dazu wird das Klebstoffkonzentrat vorzugsweise im Gewichtsverhältnis von 1 : 1 bis 1 : 50, besonders bevorzugt 1 : 2 bis 1 : 35, insbesondere 1: 2 bis 1 : 25 mit Wasser oder wässriger Dispersion vermischt. Wandbeläge können beispielsweise Plakate oder flächige Beläge aus Styropor, Kork, Textil oder anderem Polymer sein. Diese flächigen Materialien können mit Hilfe des Klebstoffs auch untereinander verklebt werden, sofern mindestens ein saugfähiges Material vorliegt.

Die Erfindung betrifft auch ein Verfahren zum Anbringen von Tapeten oder anderen Wandbelägen an der Wand, von textilen Bodenbelägen auf dem Boden oder zum Verkleben von Vlies, Papier, Karton oder Pappe, bei dem man ein Klebstoffkonzentrat, wie es vorstehend definiert ist, mit Wasser vermischt, danach das Gemisch auf die zu verklebenden Werkstoffe zumindest einseitig aufbringt und die zu verklebenden Werkstoffe mit der dazwischen liegenden Klebstoffschicht zusammenfügt.

Beim Einsatz in den erfindungsgemäßen Klebstoffkonzentraten zeigen die beschriebenen Ca-Verbindungen eine stabilisierende Wirkung und zudem einen "Anti-Cake-Effekt". Insbesondere die feinteilige gefällte Kreide zeigt diesen Effekt, d. h. sie verhindert eine Gradientenbildung, so dass eine Verklumpung ausbleibt und die Klebstoffkonzentrate über längere Zeit lagerstabil sind (mindestens drei Monate bei 40 °C, entsprechend mindestens 12 Monaten bei Raumtemperatur). Ohne an eine Theorie gebunden zu sein, ist es möglich, dass die Ca-Ionen die Quellung der ionischen Gruppen der Carboxymethylcellulose, Stärke oder Stärkederivate blockieren.

Durch Zusatz der erfindungsgemäßen Ca-Verbindungen werden auch dünnflüssige Klebstoffkonzentrate stabilisiert. Die Erfindung betrifft damit auch die Verwendung von Ca-Verbindungen als Additiv zur Stabilisierung der Klebstoffkonzentrate.

Die erfindungsgemäßen Klebstoffkonzentrate können damit dünnflüssig bzw. fließfähig und dennoch stabil ausgebildet werden.

Dabei kann bei Einsatz anionischer Celluloseether oder Stärkederivate als Klebstoffkonzentratbasis, die selber tensidischen Charakter besitzen, auch von der Zugabe eines weiteren Tensids abgesehen werden. Solche Klebstoffkonzentrate können aufgrund ihrer den Untergrund stark befeuchtenden Wirkung und ihrer langen offenen Zeit auch als Tapetenablöser verwendet werden. Beim Auftrag auf eine schon vorhandene Tapete wird der trockene Klebstofffilm zwischen Tapete und Untergrund durch Befeuchtung wieder angelöst bzw. aufgeweicht. Dies hat den Vorteil, dass der Tapetenablöser, der in wasserdünnen Filmen sehr schnell abtrocknet, nicht vermehrt aufgetragen werden muss. Außerdem wird so ein Verbleib von Tensidrückständen des Tapetenablösers auf dem Untergrund vermieden, welche beim erneuten Anbringen einer Tapete hinderlich sein können.

Ferner ist es möglich, die erfindungsgemäßen Klebstoffkonzentrate durch Zusatz von Tensiden, insbesondere nichtionischen und/oder anionischen Tensiden, Fettalkoholen, Benzolsulfonaten oder Gemischen davon in Tapetenablöserkonzentrate zu überführen.

Die Erfindung betrifft damit auch ein Tapetenablöserkonzentrat, enthaltend ein Konzentrat, wie es vorstehend definiert ist, und mindestens ein Tensid, ausgewählt aus nicht ionischen Tensiden, anionischen Tensiden, Fettalkoholen, Alkylbenzolsulfonaten und Gemischen davon. Vorzugsweise wird das mindestens eine Tensid in einer Menge von 0,25 bis 25 Gew.%, besonders bevorzugt 1 bis 20 Gew.-%, insbesondere 2,5 bis 15 Gew.-%, bezogen auf das vorstehend beschriebene Konzentrat, eingesetzt.

Das Tapetenablöserkonzentrat weist den Vorteil auf, dass es dünnflüssig ist, jedoch bei Zumischung von Wasser gelförmig wird. Gegenüber gebrauchsfertigen gelförmigen Tapetenablösern sind wesentlich geringere Lagervolumina und -kosten erforderlich. Gegenüber wasserdünnen Tapetenablösern erfolgt ein wesentlich vereinfachter Auftrag und eine saubere Handhabung.

Die Erfindung wird durch die nachstehenden Beispiele näher erläutert. In den Beispielen sind alle Mengen Gewichtsteile.

### Herstellung der Formulierungen:

Ein Teil des Polyethylenglykols wurde mit dem Wasser vorgelegt. Der Stabilisator (Laponite® RD) wurde unter Rühren zugegeben, und das Gemisch wurde für 30 min bei 1000 Upm mit einem Laborrührwerk gerührt. Danach erfolgte die Zugabe des restlichen Polyethylenglykols bei 250 Upm. Die weiteren Bestandteile wurden entsprechend der Rezeptur-Reihenfolge (siehe Tabellen) bei 500 - 750 Upm zugegeben.

Nachdem alle Komponenten zugesetzt wurden, wurde nochmals für 10 min bei 500 Upm nachgerührt.

### Beurteilung der Konsistenz:

Die Beurteilung der Konsistenz erfolgte direkt nach Herstellung/nach Abkühlung des Produktes.

Die Beurteilung der Konsistenz erfolgte nach Lagerung für 12 Wochen bei 40 C.
- Material ist gut fließfähig
- Material ist ausreichend fließfähig
- Material ist bedingt fließfähig
- Material ist nicht fließfähig, Material ist pastös

Folgende Hydroxypropylcarboxylmethylstärken wurden eingesetzt:

| Solvitose® 2453, vermahlen | | ideal | Material 1 | Material 2 | Material 3 | Material 4 |
|---|---|---|---|---|---|---|
| Sieblinie: (%) | > 0.4 mm | kein RS | 0,1 | kein RS | kein RS | kein RS |
| | > 0.2 mm | max. 0,2 | 0,1 | 0,6 | 0,3 | 0,2 |
| | > 0.1 mm | 55-65 | 57,8 | 64,3 | 41,2 | 72,4 |
| | < 0.1 mm | 35-45 | 42,0 | 35,1 | 58,5 | 27,4 |
| | | | | | | |
| | < 0.2 mm | | 99,80% | 99,40% | 99,70% | 99,80% |

**Tabelle 1: Variation der Menge an Schäferkreide (V1 = Vergleich; ohne Schäferkreide)**

| **Produktname** | **Charakteristik** | **Hersteller** | **Formulierung V 1** | **Formulierung 2** | **Formulierung 3** | **Formulierung 4** |
|---|---|---|---|---|---|---|
| PEG 400 | Polyethylenglykol | Huntsmen | 57,25 bzw. 57,45 | 57,10 bzw. 57,30 | 55,95 bzw. 56,15 | 50,95 bzw. 51,15 |
| Solvitose^{®}2453, vermahlen | Hydroxypropylcarboxymethylstärke | AVEBE | 36,0 | 32,30 | 32,30 | 32,30 |
| Wasser | | | 4,45 | 4,45 | 4,45 | 4,45 |
| Laponite^{®} RD | synthetisches Schichtsilikat | Solvay Alkali GmbH | 1,90 | 1,90 | 1,90 | 1,90 |
| Schäferkreide | gefällte Kreide, Calciumcarbonat | Schäfer Kalk | | 3,85 | 5,00 | 10,00 |
| Integra® 44 | Konservierer, Formaldehydabspalter Sodiumhydroxymethylglycinat | Sutton Laboratories (ISP) | 0,20 | 0,20 | 0,20 | 0,20 |
| Tego^{®} Suerten 1488 | Entschäumer, Polysiloxan | Goldschmidt (Degussa) | 0,20 bzw. 0,0 | 0,20 bzw. 0,0 | 0,20 bzw. 0,0 | 0,20 bzw. 0,0 |
| Konsistenz nach Herstellung | | | gut fließfähig | gut fließfähig | gut fließfähig | ausreichend fließfähig |
| Konsistenz nach Lagerung | | | deutliche Serumbildung | Serumbildung | Serumbildung | leichte Serumbildung |
| | | | Bodensatz | kein Bodensatz | kein Bodensatz | kein Bodensatz |
| 12 Wochen/40 °C | | | | | | |
| | | | durch Schütteln nicht zu homogenisieren | durch Schütteln gut zu homogenisieren | durch Schütteln gut zu homogenisieren | durch Schütteln gut zu homogenisieren |

**Tabelle 2: Variation der Wassermenge**

| **Produktname** | **Charakteristik** | **Hersteller** | **Formulierung 3** | **Formulierung 6** | **Formulierung 7** |
|---|---|---|---|---|---|
| PEG 400 | Polyethylenglykol | Huntsmen | 55, 95 bzw. 56,15 | 49,4 bzw. 49,6 | 44,1 bzw. 44, 3 |
| Solvitose^{®} 2453, vermahlen | Hydroxypropylcarboxymethylstärke | AVEBE | 32,30 | 34,2 | 30,5 |
| Wasser | | | 4,45 | 9,0 | 18,0 |
| Laponite^{®} RD | synthetisches Schichtsilikat | Solvay Alkali GmbH | 1,90 | 2,0 | 2,0 |
| Schäferkreide | gefällte Kreide, Calciumcarbonat | Schäfer Kalk | 5,00 | 5,00 | 5,00 |
| Integra^{®} 44 | Konservierer, Formaldehydabspalter Sodiumhydroxymethylglycinat | Sutton Laboratories (ISP) | 0,20 | 0,20 | 0,20 |
| Tego^{®} Suerten 1488 | Entschäumer, Polysiloxan | Goldschmidt (Degussa) | 0,20 bzw. 0,0 | 0,20 bzw. 0,0 | 0,20 bzw. 0,0 |
| Konsistenz nach Herstellung | | | gut fließfähig | Gut fließfähig | gut fließfähig |
| Konsistenz nach Lagerung | | | | | |
| | | | Serumbildung | Serumbildung | keine Serumbildung |
| 12 Wochen/40 °C | | | kein Bodensatz | kein Bodensatz | kein Bodensatz |
| | | | durch Schütteln gut zu homogenisieren | durch Schütteln gut zu homogenisieren | durch Schütteln gut zu homogenisieren |

**Tabelle 3: Tapetenablöser (mit unterschiedlichen Tensiden)**

| **Produktname** | **Charakteristik** | **Hersteller** | **Formulierung 8** | **Formulierung 9** | **Formulierung 10** | **Formulierung 11** | **Formulierung 12** |
|---|---|---|---|---|---|---|---|
| PEG 400 | *Polyethylenglykol* | Huntsmen | 48,30 | 39,40 | 39,30 | 33,70 | 57,30 |
| Solvitose^{®} 2453, vermahlen | *Hydroxypropylcarboxymethylst ärke* | AVEBE | 31,00 | 31,00 | 31,00 | 31,00 | 22,00 |
| Wasser | | | 4,50 | 4,50 | 4,50 | 4,50 | 4,50 |
| Laponite^{®} RD | synthetisches *Schichtsilikat* | Solvay Alkali GmbH | 2,00 | 2,00 | 2,00 | 2,00 | 2,00 |
| Schäferkreide | gefällte Kreide, *Calciumcarbonat* | Schäfer Kalk | 5,00 | 5,00 | 5,00 | 5,00 | 5,00 |
| Dehydol^{®} 980 | *C10 -14 Fettalkolhol ethoxyliert* / *propoxyliert (1,2 PO* + *6,4 EO* ) | Cognis GmbH | 2,50 | 4,90 | | | 2,50 |
| Dehypon^{®} LS 54 | *C12 -14 Fettalkohol ethoxyliert* / *propoxyliert (4 PO* + *5 EO)* | Cognis GmbH | 6,50 | 13,00 | | 15,00 | 6,50 |
| Hydropalat^{®} 3037 | | Cognis GmbH | | | 18,00 | | |
| Maranilpaste^{®} A 55 | *Alkylbenzolsulfonat - Na, C* 1-*13 lin.* | Cognis GmbH | | | | 8,6 | |
| Integra^{®} 44 | Konservierer, Formaldehydabspalter *Sodiumhydroxymethylglycinat* | Sutton Laboratories (ISP) | 0,20 | 0,20 | 0,20 | 0,20 | 0,20 |
| Tego^{®} Suerten 1488 | Entschäumer, *Polysiloxan* | Goldschmidt (Degussa) | | | | | |

| **Konsistenz nach Herstellung** | | | | | | | |
|---|---|---|---|---|---|---|---|
| | | | **Gut fließfähig** | **gut fließfähig** | **gut fließfähig** | **gut fließfähig** | **gut fließfähig** |
| **Konsistenz nach Lagerung** | | | | | | | |
| | | | Serumbildung | | | | deutliche Serumbildung |
| 12 Wochen / 40° C | | | kein Bodensatz durch Schütteln gut zu homogenisieren | | | | kein Bodensatz durch Schütteln gut zu homogenisieren |

**Tabelle 4: Ansätze mit Dispersionszusatz**

| **Produktname** | **Charakteristik** | **Hersteller** | **Formulierung 13** | **Formulierung 14** | **Formulierung 15** |
|---|---|---|---|---|---|
| PEG 400 | *Polyethylenglykol* | Huntsmen | 45,30 | 45,30 | 28,30 |
| Solvitose 2453, vermahlen | *Hydroxypropylcarboxymethylstärke* | AVEBE | 15,00 | 15,00 | 15,00 |
| Wasser | | | 4,50 | 4,50 | 21,50 |
| Laponite RD | synthetisches *Schichtsilikat* | Solvay Alkali GmbH | 2,00 | 2,00 | 2,00 |
| Schäferkreide | gefällte Kreide, *Calciumcarbonat* | Schäfer Kalk | 5,00 | 5,00 | 5,00 |
| Wormalit PM 6009 | *Polyvinylacetat-Dispersion* | | 28,00 | | |
| Acronal S 533 | *Styrol-Acrylat - Dispersion* | | | 28,00 | 28,00 |
| Integra 44 | Konservierer, Formaldehydabspalter *Sodiumhydroxymethylglycinat* | Sutton Laboratories (ISP) | 0,20 | 0,20 | 0,20 |

| **Konsistenz nach Herstellung** | | | **fließfähig** | **fließfähig** | **fließfähig** |
|---|---|---|---|---|---|
| **Konsistenz nach Lagerung** | | | keine Serumbildung | geringe Serumbildung | geringe Serumbildung |
| | | | kein Bodensatz | | |
| 12 Wochen/40° C | | | | kein Bodensatz | kein Bodensatz |
| | | | durch Schütteln zu homogenisieren | | |
| | | | | durch Schütteln zu homogenisieren | durch Schütteln zu homogenisieren |

**Tabelle 5: Ansätze Tapetenlöser mit Konservierer und teilweise Lösungsmittel**

| **Produktname** | **Charakteristik** | **Hersteller** | **Formulierung 16** | **Formulierung 17** | **Formulierung 18** | **Formulierung 19** | **Formulierung 20** | **Formulierung 21** |
|---|---|---|---|---|---|---|---|---|
| PEG 400 | *Polyethylenglykol* | Huntsmen | 57,30 | 43,30 | 42,30 | 48,30 | 39,30 | 33,70 |
| Solvitose 2453, vermahlen | *Hydroxypropylcarboxymethylstärke* | AVEBE | 31,00 | 31,00 | 31,00 | 31,00 | 31,00 | 31,00 |
| Wasser | | | 4,50 | 4,50 | 4,50 | 4,50 | 4,50 | 4,50 |
| Laponite RD | Synthetisches *Schichtsilikat* | Solvay Alkali GmbH | 2,00 | 2,00 | 2,00 | 2,00 | 2,00 | 2,00 |
| Schäferkreide | Gefällte Kreide, *Calciumcarbonat* | Schäfer Kalk | 5,00 | 5,00 | 5,00 | 5,00 | 5,00 | 5,00 |
| Dehydol 980 | *C10-14 Fettalkoho*/Cognis *ethoxy*/*iert*/*propoxy*/*iert (1,2 PO* + *6,4 EO)* | GmbH | | | | 2,50 | | |
| Dehypon LS 54 | C12-14 Fettalkoho ethoxyliert/propoxyliert (4PO + 5 EO) | Cognis GmbH | | | 6,50 | 6.50 | | 15,00 |
| Hydropalat 3037 | | Cognis GmbH | | | | | 18,00 | |
| Maranilpaste A 55 | Alkylbenzolsulfonat - Na, C1-13 lin. | Cognis GmbH | | | | | | 8,6 |
| Integra 44 | Konservierer, Formaldehydabspalter | Sutton Laboratories | 0,20 | 0,20 | 0,20 | 0,20 | 0,20 | 0,20 |
| | *Sodiumhydroxymethylglycinal* | (ISP) | | | | | | |
| Isopropanol | | | | 14,00 | | | | |
| Ethanol | | | | | 15,00 | | | |
| Konsistenz nach Herstellung | | | gut fließfähig | gut fließfähig | gut fließfähig | gut fließfähig | gut fließfähig | gut fließfähig |
| Konsistenz nach Lagerung 12 Wochen/40 °C | | | Serumbildung | Serumbildung | Serumbildung | Serumbildung | Serumbildung | Serumbildung |
| | | | kein Bodensatz | kein Bodensatz | kein Bodensatz | kein Bodensatz | kein Bodensatz | kein Bodensatz |
| | | | durch Schütteln gut zu homogenisieren | durch Schütteln gut zu homogenisieren | durch Schütteln durch gut zu homogenisieren | Schütteln gut zu homogenisieren | durch Schütteln gut zu homogenisieren | durch Schütteln gut zu homogenisieren |

## Patentansprüche

1. Flüssiges Klebstoffkonzentrat, enthaltend Carboxymethylcellulose, Stärke, Stärkederivate oder Gemische davon, mindestens einen Stabilisator und mindestens eine Ca-Verbindung in einem wassermisch- oder -emulgierbaren, organischen Lösungsmittel, **dadurch gekennzeichnet, dass** es 10 bis 90 Gew.-% des Lösungsmittels, 5 bis 50 Gew.-% Carboxymethylcellulose, Stärke, Stärkederivate oder Gemische davon, 0,1 bis 10 Gew.-% des mindestens einen Stabilisators, 1 bis 30 Gew.-% der mindestens einen Ca-Verbindung, 0 bis 2 Gew.-% mindestens eines Konservierungsmittels, 0 bis 2 Gew.-% mindestens eines Entschäumers und 0 bis 50 Gew.-% Wasser, das wässrige Dispersionen bildende Polymere enthalten kann, jeweils bezogen auf das Konzentrat, enthält, wobei die Summe aller Inhaltsstoffe des Konzentrats 100 Gew.-% ergibt.

2. Klebstoffkonzentrat nach Anspruch 1, **dadurch gekennzeichnet, dass** es mindestens ein Konservierungsmittel enthält.

3. Klebstoffkonzentrat nach einem der Ansprüche 1 oder 2, **dadurch gekennzeichnet, dass** es mindestens einen Entschäumer enthält.

4. Klebstoffkonzentrat nach einem der Ansprüche 1 bis 3, **dadurch gekennzeichnet, dass** das Lösungsmittel einen Alkohol, Glykol, Polyalkylenglykol oder Ether oder Ester davon oder deren Gemische enthält.

5. Klebstoffkonzentrat nach einem der Ansprüche 1 bis 4, **dadurch gekennzeichnet, dass** es mindestens einen anionischen Stärkeether oder anionischen Celluloseether enthält, und/oder mindestens einen Stabilisator auf Silikatbasis enthält.

6. Klebstoffkonzentrat nach einem der Ansprüche 1 bis 5, **dadurch gekennzeichnet, dass** die Ca-Verbindung eine anorganische Ca-Verbindung ist.

7. Klebstoffkonzentrat nach Anspruch 6, **dadurch gekennzeichnet, dass** die anorganische Ca-Verbindung ausgewählt ist aus Calciumoxid, -hydroxid, -carbonat, -sulfat und Gemischen davon, oder die anorganische Ca-Verbindung gefällte Kreide ist.

8. Verwendung eines Klebstoffkonzentrats nach einem der Ansprüche 1 bis 7 als Tapetenablöserkonzentrat oder, nach Verdünnen mit Wasser, als Klebstoff zum Anbringen von Tapeten oder anderen Wand/Bodenbelägen auf saugfähigen Untergründen oder als Vlies-, Papier-, Karton- oder Pappeklebstoff oder als Tapetenablöser.

9. Verwendung nach Anspruch 8, **dadurch gekennzeichnet, dass** das Klebstoffkonzentrat im Gewichtsverhältnis von 1 : 1 bis 1 : 50 mit Wasser vermischt wird.

10. Verwendung nach Anspruch 8 oder 9, **dadurch gekennzeichnet, dass** zusätzlich wässrige Dispersionen eingesetzt werden.

11. Verwendung von flüssigen Klebstoffkonzentraten oder Tapetenablöserkonzentraten auf Basis von Carboxymethylcellulose, Stärke, Stärkederivaten oder Gemischen davon, die mit Ca-Verbindungen als Additiv stabilisiert sind.

12. Tapetenablöserkonzentrat, enthaltend ein Konzentrat, wie es in einem der Ansprüche 1 bis 7 definiert ist, und gegebenenfalls mindestens ein Tensid, ausgewählt aus nichtionischen Tensiden, anionischen Tensiden, Fettalkoholen, Alkylbenzolsulfonaten und Gemischen davon.

13. Tapetenablöserkonzentrat nach Anspruch 12, **dadurch gekennzeichnet, dass** es das mindestens eine Tensid in einer Menge von 0,25 bis 25 Gew.-% enthält, bezogen auf das Konzentrat gemäß einem der Ansprüche 1 bis 7.

## Claims

1. A liquid adhesive concentrate, containing carboxymethyl cellulose, starch, starch derivatives or mixtures thereof, at least one stabilizer and at least one Ca compound in a water-miscible or water-emulsifiable organic solvent, **characterized in that** it contains 10 to 90 wt.% of the solvent, 5 to 50 wt.% carboxymethyl cellulose, starch, starch derivatives or mixtures thereof, 0.1 to 10 wt.% of the at least one stabilizer, 1 to 30 wt.% of the at least one Ca compound, 0 to 2 wt.% of at least one preservative, 0 to 2 wt.% of at least one defoamer and 0 to 50 wt.% water that can contain aqueous dispersion-forming polymers, based on the concentrate in each case, the sum of all the ingredients of the concentrate being 100 wt.%.

2. The adhesive concentrate according to claim 1, **characterized in that** it contains at least one preservative.

3. The adhesive concentrate according to one of claims 1 or 2, **characterized in that** it contains at least one defoamer.

4. The adhesive concentrate according to one of claims 1 to 3, **characterized in that** the solvent contains an alcohol, glycol, polyalkylene glycol or ethers or esters thereof or mixtures thereof.

5. The adhesive concentrate according to one of claims 1 to 4, **characterized in that** it contains at least one anionic starch ether or anionic cellulose ether, and/or at least one silicate-based stabilizer.

6. The adhesive concentrate according to one of claims 1 to 5, **characterized in that** the Ca compound is an inorganic Ca compound.

7. The adhesive concentrate according to claim 6, **characterized in that** the inorganic Ca compound is selected from calcium oxide, calcium hydroxide, calcium carbonate, calcium sulfate and mixtures thereof, or the inorganic Ca compound is precipitated chalk.

8. The use of an adhesive concentrate according to one of claims 1 to 7 as a wallpaper-removing concentrate or, after being diluted with water, as an adhesive for applying wallpaper or other wall/floor coverings to absorbent substrates, or as a nonwoven fabric, paper, cardboard or paperboard adhesive or as a wallpaper-remover.

9. The use according to claim 8, **characterized in that** the adhesive concentrate is mixed with water in a weight ratio of from 1:1 to 1:50.

10. The use according to claim 8 or 9, **characterized in that** aqueous dispersions are additionally used.

11. The use of liquid adhesive concentrates or wallpaper-removing concentrates based on carboxymethyl cellulose, starch, starch derivatives or mixtures thereof, which are stabilized with Ca compounds as additive.

12. Wallpaper-removing concentrate containing a concentrate as defined in one of claims 1 to 7 and optionally at least one surfactant, selected from non-ionic surfactants, anionic surfactants, fatty alcohols, alkylbenzene sulfonates and mixtures thereof.

13. Wallpaper-removing concentrate according to claim 12, **characterized in that** it contains at least one surfactant in an amount of from 0.25 to 25 wt.%, based on the concentrate according to one of claims 1 to 7.

## Revendications

1. Concentré d'adhésif liquide contenant de la carboxyméthylcellulose, de l'amidon, des dérivés d'amidon ou des mélanges de ceux-ci, au moins un stabilisant et au moins un composé de Ca dans un solvant organique miscible ou émulsifiable dans l'eau **caractérisé en ce qu'**il contient de 10 à 90 % en poids de solvant, de 5 à 50 % en poids de carboxyméthylcellulose, d'amidon, de dérivés d'amidon ou de mélanges de ceux-ci, de 0,1 à 10 % en poids de l'au moins un stabilisant, de 1 à 30 % en poids de l'au moins un composé de Ca, de 0 à 2 % en poids d'au moins un agent conservateur, de 0 à 2 % en poids d'au moins un agent antimoussant et de 0 à 50 % en poids d'eau, pouvant contenir des polymères formant des dispersions aqueuses, respectivement par rapport au concentré, la somme de tous les ingrédients du concentré étant égale à 100 % en poids.

2. Concentré d'adhésif selon la revendication 1, **caractérisé en ce qu'**il contient au moins un agent conservateur.

3. Concentré d'adhésif selon une des revendications 1 ou 2, **caractérisé en ce qu'**il contient au moins un agent antimousse.

4. Concentré d'adhésif selon l'une quelconque des revendications 1 à 3, **caractérisé en ce que** le solvant contient un alcool, un glycol, un polyalkylèneglycol ou un éther ou ester de ceux-ci, ou des mélanges de ceux-ci.

5. Concentré d'adhésif selon l'une quelconque des revendications 1 à 4, **caractérisé en ce qu'**il contient au moins un éther d'amidon anionique ou un éther de cellulose anionique, et/ou au moins un stabilisant à base de silicate.

6. Concentré d'adhésif selon l'une quelconque des revendications 1 à 5, **caractérisé en ce que** le composé de Ca est un composé de Ca inorganique.

7. Concentré d'adhésif selon la revendication 6, **caractérisé en ce que** le composé de Ca inorganique est choisi parmi l'oxyde de calcium, l'hydroxyde de calcium, le carbonate de calcium, le sulfate de calcium et des mélanges de ceux-ci, ou que le composé de Ca inorganique est une craie précipitée.

8. Utilisation d'un concentré d'adhésif selon l'une quelconque des revendications 1 à 7 en tant que concentré décapant de papier peint ou, après dilution avec de l'eau, comme un adhésif pour l'application de papier peint ou d'autres revêtements muraux/revêtements de sol sur des supports absorbants ou comme adhésif non-tissé, papier, carton ou cartonnage ou comme décollant.

9. Utilisation selon la revendication 8 **caractérisée en ce que** le concentré d'adhésif est mélangé avec de l'eau selon un rapport pondéral de 1: 1 à 1: 50.

10. Utilisation selon la revendication 8 ou 9 **caractérisée en ce que** des dispersions aqueuses sont de plus utilisées.

11. Utilisation de concentrés d'adhésifs liquides ou de concentrés décollant le papier peint basés sur de la carboxyméthylcellulose, de l'amidon, des dérivés d'amidon ou des mélanges de ceux-ci qui sont stabilisés avec des composés de Ca en tant qu'additif.

12. Concentré décollant le papier peint, contenant un concentré qui est défini dans l'une quelconque des revendications 1 à 7 et éventuellement au moins un agent tensioactif choisi parmi les tensioactifs non ioniques, les tensioactifs anioniques, les alcools gras, les alkylbenzènesulfonates et des mélanges de ceux-ci.

13. Concentré décollant le papier peint selon la revendication 12, **caractérisé en ce qu'**il contient l'au moins un tensio-actif dans une proportion de 0,25 à 25 % en poids, par rapport au concentré selon l'une quelconque des revendications 1 à 7.
